# DEMANDE DE BREVET EUROPEEN

(11) **EP 1 241 492 A1**
(43) Date de publication de la demande: **18.09.2002**
(21) Numéro de dépôt: 02290603.6
(22) Date de dépôt: 11.03.2002
(51) Int. Cl.: G02B 6/16, G02B 6/22, H01S 3/067, G02B 6/12

(54) **Fibre optique photonique a forte surface effective**

(30) Priorité: 16.03.2001 FR 0103639
(71) Demandeur: ALCATEL, 75008 Paris (FR)
(72) Inventeur: Bayart, Dominique, 92140 Clamart (FR); Berthelot, Laurent, 91400 Orsay (FR)
(74) Mandataire: Laroche, Danièle

(57) **Abrégé**

L'invention propose une fibre optique à forte surface effective; elle présente des trous répartis sur des points d'une matrice régulière. Ces trous sont disposés sur au moins deux couches concentriques de points de la matrice centrées sur le centre de la fibre. Les-trous de la fibre disposés sur une couche ont une même dimension et occupent l'ensemble des points possibles de la couche. En outre, la fibre présente au moins deux couches dont les trous présentent des dimensions différentes.

## Description

La présente invention concerne le domaine des transmissions par fibre optique, et plus spécifiquement, les fibres optiques photoniques.

Pour des fibres optiques, on qualifie généralement le profil d'indice en fonction de l'allure du graphe de la fonction qui associe au rayon de la fibre l'indice de réfraction. On représente de façon classique sur les abscisses la distance r au centre de la fibre, et sur les ordonnées la différence entre l'indice de réfraction de la gaine et l'indice de réfraction de la fibre. On parle ainsi de profil d'indice en "échelon", en "trapèze" ou en "triangle" pour des graphes qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent. Les variations de l'indice selon le profil permettent de contrôler la propagation de la lumière le long de la fibre.

Sont apparues récemment des fibres dites "photoniques", appelées aussi en langue anglaise "photonic crystal fibres" (PCF): ces fibres ne sont pas, comme les fibres classiques, entièrement constituées d'un matériau solide transparent comme la silice dopée; en section, une fibre photonique présente une pluralité de trous d'air. Ces trous sont parallèles à l'axe de la fibre, et s'étendent longitudinalement le long de la fibre. Pratiquement, ces trous peuvent être obtenus en fabriquant la préforme par assemblage de tubes capillaires ou de cylindres de silice, en respectant le motif des trous à obtenir dans la fibre. L'étirage d'une telle préforme fournit une fibre avec des trous correspondant aux tubes capillaires.

La présence de ces trous dans le matériau de la fibre crée des variations d'indice moyen du matériau; ces variations de l'indice peuvent, comme dans une fibre optique classique, être utilisées pour le guidage de signaux lumineux à des longueurs d'onde adaptées. Une description de telles fibres photoniques est fournie dans WO-A-00 49 435 : ce document, outre le principe de fonctionnement des fibres photoniques, décrit un procédé permettant l'assemblage de telles fibres. En section droite, les motifs de trous proposés dans ce document utilisent une matrice de trous triangulaire, c'est-à-dire que les trous possibles forment des lignes suivant trois directions inclinées de 60° les unes par rapport aux autres. L'omission de certains trous dans la matrice permet de guider la lumière; spécifiquement, dans un mode de réalisation, le trou au centre de la fibre est omis, de sorte qu'en section, la fibre est constituée d'un coeur solide, entouré de trous formés suivant la matrice triangulaire. Dans le deuxième mode de réalisation, sont prévus au centre de la fibre sept trous formant les sommets et le centre d'un hexagone régulier; autour de cet hexagone central, les trous sont disposés sur les sommets des hexagones formant un pavage de la section de la fibre; toutefois, il n'est pas prévu de trou au centre des hexagones autres que l'hexagone central. Ce document propose encore d'utiliser des trous de diamètre différent, en rompant la symétrie de la fibre par rotation d'angle 60° autour de son centre; ceci a pour but de modifier la biréfringence de la fibre.

R.F. Cregan et autres, Distribution of Spontaneous Emission from an Er³-Doped Photonic Crystal Fiber, Journal of Lightwave Technology, vol. 17 no. 11, Novembre 1999, étudie l'émission spontanée dans une fibre photonique. Les trous d'air sont répartis suivant une matrice triangulaire, la fibre présentant une forme hexagonale; au centre de l'hexagone, la fibre ne présente pas de trou, et la silice est dopée à l'erbium. Ce document étudie la distribution spatiale de l'émission spontanée lors du pompage axial de la fibre; il montre que la distribution est fonction de la répartition des trous dans la fibre, en accord avec la simulation. Il n'est fait aucune référence à une utilisation de la fibre dopée.

Thomas Sondergaard, Photonic Crystal Distributed Feedback Fiber Lasers with Bragg Gratings, Journal of Lightwave Technology, vol. 18 no. 4, Avril 2000, discute de l'utilisation de fibres photoniques pour réaliser des lasers à fibres; il précise que les surfaces de mode pour le signal ou pour la pompe peuvent être plus réduites ou plus importantes que les surfaces de mode correspondantes de fibres à saut d'indice classiques. L'utilisation de fibres photoniques permet donc de réaliser des lasers à fibres à faible seuil de pompage - dans le cas de faibles surfaces de mode - ou de réaliser des lasers à forte puissance - dans le cas de fortes surfaces de mode. Ce document ne fait état que de simulations numériques, à l'exclusion de toute réalisation pratique.

W.J. Wadsworth et autres, Yb³⁺-doped photonic crystal fibre laser, Electronics Letters, vol. 36 no. 17, Août 2000, met en évidence expérimentalement un effet laser dans une fibre photonique; la fibre est constituée en entourant de capillaires en silice pure un tube de silice dopée à l'Yb et codopé à l'Al; l'ensemble est ensuite étiré pour former une fibre, autour de laquelle on dispose un manchon en silice pure. Deux rangées de trous entourent le coeur dopé et la lumière est fortement confinée dans le coeur dopé de la fibre.

EP-A-1 043 816 décrit une fibre à double gaine; le signal est transmis dans le coeur dopé de la fibre et une pompe est injectée dans la première gaine. Pour diriger la lumière de la pompe vers le coeur dopé, il est proposé de prévoir dans la première gaine des régions d'indice modifié. Ces régions d'indice modifié peuvent notamment être constituées de trous d'air. Dans un mode de réalisation sont prévus trois régions d'indice modifié, répartis sur la périphérie de la première gaine. Dans un autre mode de réalisation sont prévues six régions d'indice modifié, formant les sommets et les milieux des côtés d'un triangle équilatéral. Il est suggéré que les régions d'indice modifié doivent être disposées aussi loin que possible du coeur de la fibre, afin d'éviter de modifier la polarisation dans le coeur de la fibre.

Le problème de l'invention est la répartition des trous dans une fibre photonique, pour améliorer l'effet de confinement de la lumière à l'intérieur de la fibre. L'invention propose ainsi une fibre à double gaine, dans laquelle sont prévus des trous améliorant le recouvrement entre le signal et la pompe.

Plus précisément, l'invention propose une fibre optique photonique présentant une pluralité de trous répartis sur des points d'une matrice régulière; dans cette fibre
- les trous de la fibre sont disposés sur au moins deux couches concentriques de points de la matrice centrées sur le centre de la fibre;
- les trous de la fibre disposés sur une couche ont une même dimension et occupent l'ensemble des points de la couche;
- les trous de la fibre disposés sur au moins une couche présentent une dimension supérieure ou égale à la dimension des trous de la fibre disposés sur une autre couche qui lui est intérieure.

Dans un mode de réalisation préféré, la matrice est une matrice triangulaire, et les couches présentent une forme hexagonale.

De préférence, la fibre présente une surface effective supérieure ou égale à 150 µm². L'invention propose encore un système de transmission, présentant comme fibre de ligne une telle fibre; elle propose aussi un amplificateur optique, comprenant une section de cette fibre, cette fibre étant dopée avec au moins un ion de terre rare. Elle concerne enfin un laser à fibre, comprenant une section d'une telle fibre.

D'autres caractéristiques et avantages de l'invention apparaîtront à la lecture de la description qui suit de modes de réalisation de l'invention, donnés à titre d'exemple et en référence aux dessins annexés, qui montrent
- figure 1, une représentation schématique de la section d'une fibre optique photonique selon un mode de réalisation de l'invention;
- figure 2, une représentation du profil d'indice de consigne de la fibre de la figure 1,
- figure 3, une représentation de l'intensité du signal sur un rayon de la fibre de la figure 1.

L'invention propose, dans une fibre photonique, une répartition des trous dans la matrice de trous, suivant un motif qui préserve autant que possible la symétrie de la fibre autour de son axe longitudinal. Elle propose en revanche, dans une direction radiale, que la distribution soit irrégulière : par exemple, il est possible de supprimer certains des trous, ou encore d'en réduire le diamètre.

Dans la suite de la description, on utilise le terme "matrice" pour qualifier l'ensemble des lieux possibles des trous dans la fibre photonique; dans la mesure où la préforme de la fibre est formée par assemblage de tubes capillaires et de cylindres pleins, cette "matrice" est définie par la disposition des tubes et des cylindres dans la préforme. Dans les exemples de l'état de la technique mentionnés plus haut, la matrice est triangulaire : les tubes et cylindres sont disposés en rangées, deux rangées adjacentes étant décalées d'une distance correspondant à la distance entre deux tubes ou cylindres adjacents dans la rangée. D'autres formes de matrice sont possibles - par exemple une matrice carrée. Dans tous les cas, la matrice est formée d'un ensemble de points, en lesquels il est possible le cas échéant de prévoir un trou.

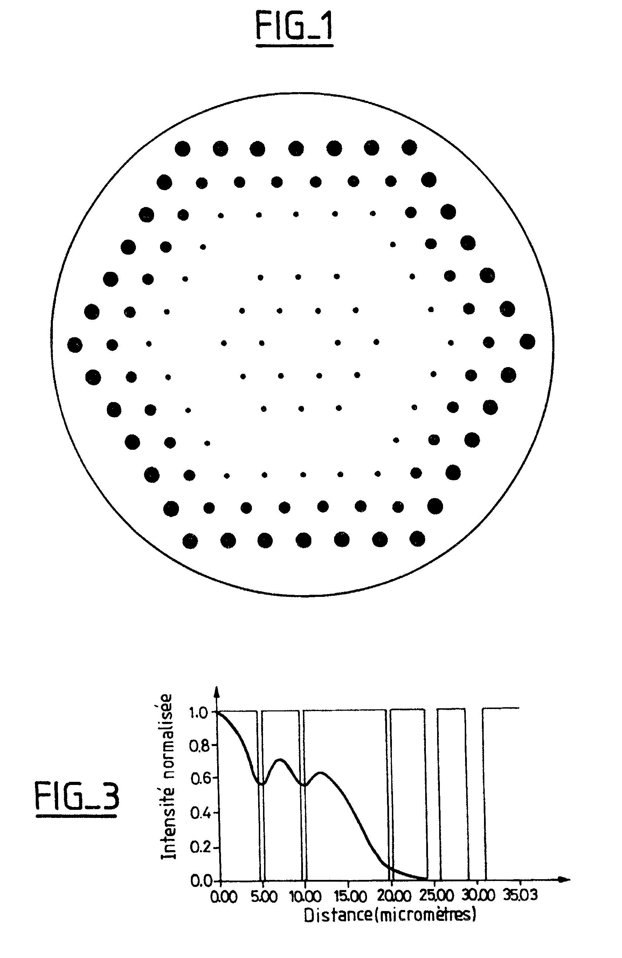

On appelle "couche" un sous-ensemble de la matrice de points, qui en section, respecte autant que possible une symétrie par rotation autour du centre de la fibre. Des couches successives sont concentriques, avec comme centre commun le centre de la fibre. Dans l'exemple d'une matrice triangulaire, une couche est typiquement formée d'un ensemble de trous disposés sur les sommets et le cas échéant les côtés d'un hexagone; la première couche présente six points disposés sur les sommets d'un hexagone dont le centre est le centre de la fibre; dans l'exemple de la figure, sont prévus des trous pour l'ensemble des points de cette couche. La deuxième couche est formée de douze points, disposés sur les sommets et au milieu des côtés d'un hexagone régulier; la longueur d'un côté de cet hexagone est égale à deux fois la longueur du côté de l'hexagone formant la première couche; dans l'exemple de la figure 1, des trous sont aussi prévus pour l'ensemble des points de cette couche. La troisième couche est formée de vingt-quatre points, répartis sur les sommets d'un hexagone, et au tiers et au deux tiers de chaque côté; il n'y a pas de trous sur la troisième couche dans l'exemple de la figure 1. On peut de la même façon définir les couches suivantes. Dans cet exemple, chaque couche est invariante par rotation d'angle 60° autour du centre de la fibre; chaque couche constitue donc une approximation d'un cercle, en utilisant les points possibles de la matrice. Cette définition d'une "couche" se généralise à d'autres types de matrices. Ainsi, pour une matrice carrée, une couche pourrait être formée d'un ensemble de points disposés sur les arêtes d'un carré ou d'un octogone; une couche serait alors invariante par rotation d'angle 90° autour du centre de la fibre. Le document W.J. Wadsworth et autres cité plus haut présente deux "périodes" de trous entourant le centre de la fibre; chaque "période" est circulaire.

La figure 1 montre une représentation schématique de la section d'une fibre optique photonique selon un mode de réalisation de l'invention; dans l'exemple de la figure 1, la matrice est triangulaire, avec une distance de 5 µm entre les points de la matrice; chaque couche forme un hexagone régulier, comme expliqué plus haut. Le centre de la fibre ne présente pas de trou; les première, deuxième et quatrième couches présentent des trous d'un diamètre de 0,5 µm. La troisième couche ne présente pas de trous; la cinquième couche présente des trous d'un diamètre de 1,5 µm, et la sixième couche des trous de diamètre de 2,0 µm. Sur un rayon passant par les sommets des hexagones formant les différentes couches, on trouve donc, en partant du centre:
- des trous de diamètre 0,5 µm à des distances de 5, 10 et 20 µm;
- un trou de diamètre 1,5 µm à une distance de 25 µm, et
- un trou de diamètre 2,0 µm à une distance de 30 µm.

Les couches de la fibre de la figure sont concentriques; lorsqu'une couche présente des trous, ces trous occupent l'ensemble des points de la couche: dans l'exemple, la première couche comprend six trous, c'est-à-dire tous les trous possibles de la première couche.

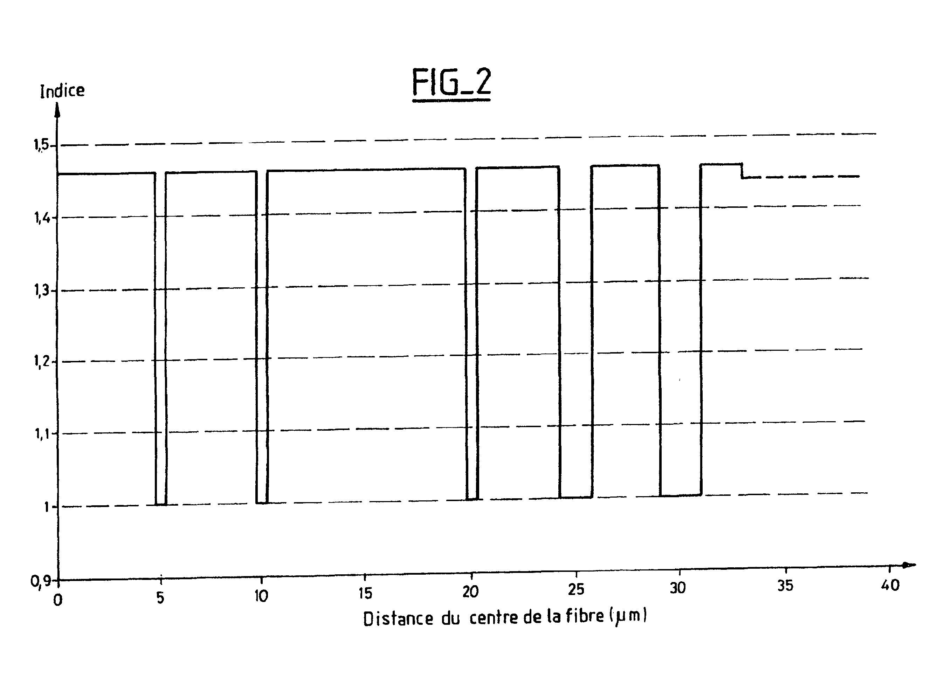

La figure 2 montre un profil d'indice de la fibre, sur un rayon de la fibre passant par un sommet de l'hexagone formé par les trous. Apparaît en ordonnée l'indice, et en abscisse la distance au centre de la fibre. Dans l'exemple de la figure, en l'absence des trous, la fibre serait une simple fibre à saut d'indice : le matériau composant la fibre présente donc un indice constant ayant une première valeur voisine de 1,46 pour des rayons inférieurs à 33 µm, et un indice d'une valeur voisine de 1,44 au-delà, i.e. dans la gaine. En l'absence de trous, un tel profil conduirait à une fibre qui ne serait pas monomode. La fibre de l'exemple, du fait des trous est monomode à toutes les longueurs d'onde.

La figure 3 montre une représentation de l'intensité du signal sur un rayon de la fibre de la figure 1. On a porté en ordonnée l'intensité normalisée du signal injecté dans la fibre, et en abscisse la distance au centre de la fibre, en µm. En trait fin se trouve le schéma du profil d'indice de la fibre. La figure montre que les trous ont pour effet de placer des « barrières » pour le champ. Plus spécifiquement, le champ a tendance à s'étaler dans les parties dans la fibre dans lesquelles le rapport entre la surface des trous et la surface de silice (facteur de remplissage par les trous) est le plus faible; on aperçoit ainsi sur la figure 3 un creux de l'intensité au voisinage des trous à 5 et 10 µm; en revanche, l'absence des trous sur la troisième rangée conduit à un maximum local de l'intensité au voisinage d'un rayon de 12 µm. Les trous des quatrième, cinquième et sixième rangées ont le même effet, qui est masqué sur la figure par la faible valeur relative de l'intensité.

La fibre de la figure 1 présente une surface effective de 991 µm². Elle présente en outre une dispersion chromatique de 21.2 ps/nm/km avec une pente de 0.071 ps/nm²/km.

Plus généralement, la fibre peut être définie de la façon suivante :
- les trous de la fibre sont disposés sur au moins deux couches concentriques de points de la matrice centrées sur le centre de la fibre;
- les trous de la fibre disposés sur une couche ont une même dimension et occupent l'ensemble des points de la couche;
- les trous de la fibre disposés sur au moins une couche présentent une dimension supérieure ou égale à la dimension des trous de la fibre disposés sur une autre couche qui lui est intérieure.

Autrement dit, les trous de la fibre présentent autant que possible une symétrie radiale, compte tenu des contraintes géométriques imposées par la matrice de points. Toutefois, suivant un rayon de la fibre, les trous présentent des dimensions variables.

Comme dans l'exemple de la figure 1, on peut prévoir au moins une couche sans trous; cette couche a pour effet de laisser le champ s'étendre dans la fibre et ainsi d'agrandir la surface effective.

Selon l'invention, les trous présentent radialement une dimension croissante: autrement dit, les trous d'une couche sont d'une dimension plus importante que les trous disposés sur une couche plus intérieure; c'est le cas dans la fibre de la figure 1, puisque les trous de la cinquième rangée sont d'une dimension supérieure aux trous des rangées d'ordre un, deux et quatre; en outre, les trous de la sixième rangée sont d'une dimension supérieure aux trous des rangées d'ordre un, deux, quatre et cinq. Cette augmentation radiale des dimensions des trous permet d'améliorer l'effet de confinement de la lumière à l'intérieur de la fibre; en effet, qualitativement, des trous de dimension plus importante correspondent à une baisse plus importante de l'indice moyen, et on peut considérer qu'une couche de trou forme une sorte de saut d'indice, avec une variation d'indice d'autant plus importante de la dimension des trous varie.

Ces différentes caractéristiques permettent d'obtenir une fibre d'une surface effective supérieure ou égale à 150 µm². La fibre est monomode à toutes les longueurs d'onde.

Ces caractéristiques peuvent être mises en oeuvre tant avec un dopage de la silice que sans dopage de la silice. Le dopage peut avoir pour effet des variations d'indice, ou peut être un dopage aux terres rares pour l'amplification.

La fibre peut être utilisée comme fibre de ligne dans un système de transmission à fibre optique; elle peut aussi être utilisée comme composant dans un laser à fibre ou un amplificateur à fibre; ceci est notamment le cas lorsqu'elle présente un dopage approprié. Dans le cas d'un amplificateur, on utilise un dopage par au moins un ion terre rare, présentant un numéro atomique entre 57 et 71. On peut notamment utiliser l'erbium, l'ytterbium, le germanium ou les autres éléments bien connus en tant que tels pour leur utilisation dans des amplificateurs optiques. La forte surface effective de la fibre est particulièrement avantageuse pour de telles applications.

## Revendications

1. Une fibre optique photonique présentant une pluralité de trous répartis sur des points d'une matrice régulière, **caractérisée en ce que**
- les trous de la fibre sont disposés sur au moins deux couches concentriques de points de la matrice centrées sur le centre de la fibre;
- les trous de la fibre disposés sur une couche ont une même dimension et occupent l'ensemble des points de la couche;
- les trous de la fibre disposés sur au moins une couche présentent une dimension supérieure ou égale à la dimension des trous de la fibre disposés sur une autre couche qui lui est intérieure.

2. La fibre de la revendication 1, **caractérisée en ce que** la matrice est une matrice triangulaire, et **en ce que** les couches présentent une forme hexagonale.

3. La fibre de l'une des revendications 1 à 2, **caractérisée en ce qu'**elle présente une surface effective supérieure ou égale à 150 µm².

4. Un système de transmission, présentant comme fibre de ligne, une fibre selon l'une des revendications 1 à 3.

5. Un amplificateur optique, comprenant une section de fibre selon l'une des revendications 1 à 3, ladite fibre étant dopée avec au moins un ion de terre rare.

6. Un laser à fibre, comprenant une section de fibre selon l'une des revendications 1 à 3.
